# EUROPÄISCHE PATENTANMELDUNG

(11) **EP 4 790 498 A1**
(43) Veröffentlichungstag der Anmeldung: **12.08.2026**
(21) Anmeldenummer: 26156637.6
(22) Anmeldetag: 05.02.2026
(51) Int. Cl.: G05B 19/18, B23Q 3/06, B23Q 17/00

(54) **VERFAHREN ZUR ERSTELLUNG EINER KONFIGURATION EINER SPANNVORRICHTUNG FÜR EINE WERKZEUGMASCHINE, SPANNVORRICHTUNG UND WERKZEUGMASCHINE**

(30) Priorität: 07.02.2025 DE 102025104597
(71) Anmelder: DMG MORI Pfronten GmbH, 87459 Pfronten (DE)
(72) Erfinder: KÖCHL, Roland, 87459 Pfronten, (DE); KÖHLER, Christoph, 87629 Füssen (DE); CHRISTOPH, Philipp, 93173 Wenzenbach (DE)
(74) Vertreter: MERH-IP Matias Erny Reichl Hoffmann Patentanwälte PartG mbB

(57) **Zusammenfassung**

Die vorliegende Erfindung betrifft ein Verfahren zum Erstellen einer Konfiguration einer Spannvorrichtung (40) für eine Werkzeugmaschine, eine Spannvorrichtung (40) und eine Werkzeugmaschine. Des Weiteren betrifft die Erfindung eine Recheneinheit (100) und ein Computerprogramm zur Durchführung des Verfahrens.

## Beschreibung

Die vorliegende Erfindung betrifft ein Verfahren zur Erstellung einer Konfiguration einer Spannvorrichtung für eine Werkzeugmaschine, eine Spannvorrichtung und eine Werkzeugmaschine. Des Weiteren betrifft die Erfindung eine Recheneinheit und ein Computerprogramm zur Durchführung des Verfahrens.

### Hintergrund der Erfindung

Zur automatisierten Bearbeitung von Werkstücken mittels einer Werkzeugmaschine können die Werkstücke mit lösbaren Spannvorrichtungen auf einer Palette befestigt sein, die wiederum lösbar mit einer entsprechenden Aufnahme der Werkzeugmaschine verbunden sein kann. Die Palette kann dabei über eine Übertragungsanordnung verfügen, die es erlaubt Energie und Signale an die Spannvorrichtungen zu übertragen, um diese automatisiert zu betätigen.

In diesem Zusammenhang zeigt DE 10 2019 211 472 A1 eine Palette zum Tragen und Befestigen eines Werkstücks, die lösbar auf eine Palettenaufnahme einer Werkzeugmaschine gespannt werden kann. Die Palette umfasst eine Übertragungsanordnung zur Energie- und Signalübertragung, so dass z.B. auf der Palette angeordnete Spanneinheiten von einer Steuereinheit der Werkzeugmaschine automatisiert betätigt werden können. Bei den Spanneinheiten kann es sich z.B. um elektrische, fluidische oder vakuum-basierte Spanneinheiten handeln.

Um eine solche automatisierte Betätigung der Spanneinheiten durch die Recheneinheit der Werkzeugmaschine zu ermöglichen, muss eine Spannvorrichtung derzeit vom Werkzeugmaschinenhersteller in der Steuer-einheit der Werkzeugmaschine eingerichtet bzw. konfiguriert werden. Nach einer solchen Konfiguration der Spannvorrichtung kann diese aus Sicherheitsgründen von einem Benutzer der Werkzeugmaschine nicht mehr geändert werden. Wenn dieser im nachfolgenden Betrieb feststellt, dass weitere Änderungen notwendig oder wünschenswert sind, muss erneut der Hersteller tätig werden. Dies kann zu unerwünschten Stillstandszeiten der Maschine und damit verbundenen Kosten führen.

Eine Aufgabe der vorliegenden Erfindung ist es, ein Verfahren und eine Recheneinheit zum Erstellen einer Konfiguration einer Spannvorrichtung für eine Werkzeugmaschine bereitzustellen, die es einem Benutzer der Werkzeugmaschine erlauben, die Spannvorrichtung selbständig einzurichten und gleichzeitig einen sicheren Betrieb derselben gewährleisten.

Zur Lösung der Aufgaben werden die Merkmale der unabhängigen Ansprüche vorgeschlagen. Vorteilhafte Ausgestaltungen finden sich in den abhängigen Ansprüchen.

### Offenbarung der Erfindung

Das erfindungsgemäße Verfahren zum Erstellen einer Konfiguration einer Spannvorrichtung für eine Werkzeugmaschine wird mittels einer Recheneinheit mit einer Ein- und Ausgabevorrichtung durchgeführt, die programmtechnisch dazu eingerichtet ist, das Verfahren durchzuführen.

Unter dem Begriff *"Konfiguration einer Spannvorrichtung"* soll z.B. ein Datensatz verstanden werden, der festlegt, welche Elemente in der Spannvorrichtung enthalten sind und wie diese miteinander verbunden sind bzw. zusammenwirken. Der erstellte Datensatz kann nachfolgend im Betrieb der Werkzeugmaschine als Software-Programm in deren Steuereinheit verwendet werden, um die Spannvorrichtung automatisiert zu betätigen und zu steuern. Des Weiteren kann mittels der Konfiguration festgelegt werden, wie einzelne Hardware-Elemente (z.B. Spanneinheiten, Sensoren, Ventile etc.) der Spannvorrichtung miteinander verknüpft werden müssen (z.B. elektrisch, hydraulisch und/oder signaltechnisch).

Bei der Recheneinheit kann es sich beispielsweise um die Steuereinheit der Werkzeugmaschine handeln, die z.B. verschiedene Eingabevorrichtungen, wie einen Touchscreen, verschiedene Bedienknöpfe und/oder eine Tastatur enthalten kann. Des Weiteren kann die Steuereinheit z.B. ein Display bzw. einen Bildschirm als Ausgabevorrichtung enthalten. Es ist ebenso möglich, dass eine Eingabe in die Steuereinheit und/oder eine Ausgabe von der Steuereinheit mittels einer App auf einem Smartphone und/oder einem Tablet erfolgen kann.

Eine erstellte Konfiguration einer Spannvorrichtung kann in Form eines Datensatzes beispielsweise in der Steuereinheit der Werkzeugmaschine oder in einer Datenbank gespeichert werden. Die Datenbank kann in der Steuereinheit der Werkzeugmaschine enthalten oder entfernt von dieser angeordnet sein. Im letzteren Fall kann die Datenbank beispielsweise auf einem externen Server gespeichert sein, der mit der Steuereinheit der Werkzeugmaschine z.B. über eine kabellose oder kabelgebundene Netzwerkverbindung verbunden sein kann. Zweckmäßigerweise ist der Datensatz derart gespeichert, dass er der Steuereinheit während eines Betriebs der Werkzeugmaschine zur Verfügung steht, um dieser zu ermöglichen, die Spannvorrichtung zu steuern und zu überwachen.

Alternativ oder zusätzlich kann als Recheneinheit zum Erstellen einer Konfiguration einer Spannvorrichtung ein Computer mit einer Tastatur und einem Bildschirm verwendet werden. In diesem Fall kann eine an dem Computer erstellte Konfiguration zur Speicherung an die Steuereinheit der Werkzeugmaschine oder die Datenbank übermittelt werden, beispielsweise mittels einer kabellosen oder kabelgebundenen Netzwerkverbindung. Es ist ebenso möglich, dass die auf dem Computer erstellte Konfiguration der Spannvorrichtung auf einem Datenträger gespeichert wird, der von der Steuereinheit der Werkzeugmaschine gelesen werden kann.

Um das erfindungsgemäße Verfahren auf der Steuereinheit der Werkzeugmaschine oder einem Computer durchzuführen, ist eine Implementierung des Verfahrens in Form eines Computerprogramms oder Computerprogrammprodukts mit Programmcode zur Durchführung aller Verfahrensschritte vorgesehen. Schließlich ist ein maschinenlesbares Speichermedium vorgesehen, auf dem das Computerprogramm gespeichert ist. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download des Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Eine zu konfigurierende, erfindungsgemäße Spannvorrichtung umfasst mindestens eine Spanneinheit, einen oder mehrere Sensoren und/oder Aktoren zur Steuerung und/oder Überwachung der mindestens einen Spanneinheit, eine Recheneinheit, die insbesondere eine Steuereinheit der Werkzeugmaschine sein kann, und mindestens eine Schnittstelleneinheit zum signaltechnischen Verbinden der Sensoren und/oder Aktoren mit der Recheneinheit. Die mindestens eine Spanneinheit der Spannvorrichtung mit den zugehörigen Sensoren und/oder Aktoren kann insbesondere auf einer Palette mit einer Übertragungsvorrichtung zur Energie- und Signalübertragung wie in DE 10 2019 211472 A1 gezeigt, montiert sein.

Dementsprechend kann eine erfindungsgemäße Werkzeugmaschine, in der die Spannvorrichtung zum Einsatz kommt, insbesondere eine solche Palette enthalten.

Gemäß einer Ausführungsform kann die mindestens eine Spanneinheit der Spannvorrichtung eine fluidische oder eine elektrische Spanneinheit sein. Eine Spanneinheit kann insbesondere ein einzelnes Spannelement, z.B. ein Paar Spannbacken, ein Spannfutter etc., umfassen, so dass in einer Spannvorrichtung zweckmäßigerweise eine Vielzahl von fluidischen und/oder elektrischen Spanneinheiten enthalten sein können. Fluidische Spanneinheiten können insbesondere hydraulische oder pneumatische Spanneinheiten sein, d.h. Spanneinheiten, die mittels einer Hydraulikflüssigkeit oder eines unter Druck stehenden Gases, wie z.B. Druckluft, betätigt werden. Als fluidische Spanneinheiten können beispielsweise hydraulische bzw. pneumatische Nullpunktspannsysteme, hydraulische bzw. pneumatische Spannbacken und/oder hydraulische bzw. pneumatische Spannfutter zum Einsatz kommen. Elektrische Spanneinheiten können beispielsweise mittels elektrischer Aktoren, z.B. Stellmotoren, oder mittels Elektromagneten betätigte Spanneinheiten sein (z.B. elektrische Spannbacken, elektrische Spannfutter und/oder Magnetspanneinheiten). Alternativ oder zusätzlich können vakuum-basierte Spanneinheiten zum Einsatz kommen, welche ein Werkstück mittels eines Vakuums auf einer Spannfläche fixieren.

Gemäß einer Ausführungsform kann mindestens ein Drucksensor in der Spannvorrichtung zum Einsatz kommen, wenn diese eine fluidische Spanneinheit beinhaltet. Mittels diesem kann ein Druck in der Spanneinheit überwacht werden, der z.B. benötigt wird, um ein Werkstück in einem hydraulischen oder pneumatischen Spannfutter zu fixieren. Aus Redundanzgründen können insbesondere zwei Drucksensoren in der Spannvorrichtung vorhanden sein, wenn in dieser eine fluidische Spanneinheit verwendet wird. Auf diese Weise kann sichergestellt werden, dass bei Ausfall eines Drucksensors noch eine Drucküberwachung durch den verbleibenden Drucksensor gegeben ist. Sind mehrere fluidische Spanneinheiten in der Spannvorrichtung enthalten, so können zweckmäßigerweise jeder Spanneinheit zwei Drucksensoren zugeordnet sein.

Des Weiteren kann bei Verwendung einer fluidischen Spanneinheit in der Spannvorrichtung ein Druckhalteventil zum Einsatz kommen. Insbesondere kann jede fluidische Spanneinheit ein Druckhalteventil umfassen, um z.B. bei einem Palettenwechsel, wenn die Spannvorrichtung z.B. von einem Hydraulik- und/oder Druckluftaggregat der Werkzeugmaschine getrennt wird, einen Druckabfall in der Spanneinheit zu verhindern.

Weitere Sensoren zur Steuerung und/oder Überwachung der mindestens einen Spanneinheit können beispielsweise Temperatur-, Kraft-, Positions-, und Winkelsensoren sein. Diese können z.B. als Dehnmessstreifen, Piezosensoren und Thermoelemente ausgeführt und an der Spanneinheit angeordnet sein. Jeder andere Sensortyp, der geeignet ist, eine Spannung eines Werkstücks in der Spanneinheit zu überwachen und/oder zu steuern, ist ebenso möglich.

Als weitere Aktoren zur Steuerung und/oder Überwachung der mindestens einen Spanneinheit können z.B. Absperrklappen und/oder Ventile zum Einsatz kommen. Jeder andere Aktortyp, der geeignet ist, eine Spannung eines Werkstücks in der Spanneinheit aufrechtzuerhalten und/oder zu steuern, ist ebenso möglich.

Bei der mindestens einen Schnittstelleneinheit zum signaltechnischen Verbinden der Sensoren und/oder Aktoren mit der Steuereinheit der Werkzeugmaschine kann es sich insbesondere um einen IO-Link Master und/oder eine IO-Link Hub gemäß dem Standard IEC 61131-9 handeln. Jeder andere Typ von Schnittstelleneinheit, der eine signaltechnische Verbindung zwischen den Sensoren und/oder Aktoren der Spannvorrichtung und der Steuereinheit der Werkzeugmaschine ermöglicht, ist ebenso möglich.

Das erfindungsgemäße Verfahren umfasst mehrere Verfahrensschritte mittels derer eine Konfiguration einer Spannvorrichtung für eine Werkzeugmaschine wie oben beschrieben erstellt wird.

Dabei wird zunächst mindestens eine Spanneinheit für die Spannvorrichtung ausgewählt. Dies kann mittels eines Auswahlmenüs erfolgen, das nach Aktivierung eine Liste mit Spanneinheiten anzeigt. Das Auswahlmenü kann auf der Ausgabevorrichtung der Recheneinheit angezeigt und von einem Benutzer aktiviert werden. Beispielsweise kann das Auswahlmenü als sogenanntes Dropdown-Menü ausgeführt sein, das sich öffnet, wenn der Benutzer auf der Ausgabevorrichtung eine entsprechende Schaltfläche betätigt. Die mittels des Auswahlmenüs angezeigte Liste mit Spanneinheiten kann z.B. alle für die Werkzeugmaschine geeigneten Spanneinheiten umfassen. Der Benutzer kann aus der Liste mit Spanneinheiten eine oder mehrere Spanneinheiten auswählen, die dann von der Recheneinheit in die Konfiguration übernommen bzw. in dieser zwischengespeichert wird.

Gemäß einer Ausführungsform kann eine für die Werkzeugmaschine geeignete Spanneinheit automatisch bestimmt werden. Mit anderen Worten kann zu Beginn eines Konfigurationsprozesses der Spannvorrichtung bereits eine automatisch bestimmte Spanneinheit in dieser enthalten sein. Dabei kann es sich z.B. um eine Spanneinheit handeln, die in der vorliegenden Werkzeugmaschine häufig genutzt wird. Diese kann von dem Benutzer durch Auswahl einer oder mehrerer anderer Spanneinheiten ersetzt werden. Es ist ebenso möglich, dass der Benutzer die automatisch bestimmte Spanneinheit beibehält und nur deren Anzahl erhöht, also z.B. zwei Spanneinheiten vom Typ der automatisch bestimmten Spanneinheit in die Konfiguration aufnimmt.

Zur automatischen Bestimmung der Spanneinheit können in der Werkzeugmaschine einsetzbare Spanneinheiten z.B. in einer Datenbank gespeichert sein, auf welche die Recheneinheit zu Beginn des Konfigurationsprozesses zugreifen kann. Dieser Datenbank kann die Recheneinheit auch die mittels des Auswahlmenüs angezeigte Liste mit Spanneinheiten entnehmen. Die Datenbank kann beispielsweise in der Steuereinheit der Werkzeugmaschine enthalten sein oder sich entfernt von dieser, z.B. auf einem externen Server, befinden. Sie kann im letzteren Fall mit der Recheneinheit z.B. mittels einer kabellosen oder kabelgebundenen Netzwerkverbindung verbunden sein.

Beispielsweise kann eine Liste von Spanneinheiten in der Datenbank gespeichert sein, wobei die Reihenfolge der Spanneinheiten ihrer Eignung für die Werkzeugmaschine entsprechen kann. Mit anderen Worten kann die am besten für die Werkzeugmaschine geeignete Spanneinheit an erster Stelle der Liste stehen, die am zweitbesten geeignete Spanneinheit an zweiter Stelle der Liste etc. Um eine Spanneinheit für die Werkzeugmaschine automatisch zu bestimmen, kann die Recheneinheit z.B. auf die an erster Stelle der Liste stehende Spanneinheit zugreifen. Jede andere Art von Datenstruktur zur Speicherung der Spanneinheiten in einer Datenbank, die es ermöglicht, auf eine geeignete Spanneinheit für die betreffende Werkzeugmaschine zuzugreifen, ist ebenso möglich.

Wenn der Benutzer keine andere Spanneinheit auswählt, so kann die Recheneinheit die automatisch bestimmte Spanneinheit in die Konfiguration übernehmen bzw. darin zwischenspeichern. Dadurch ist gewährleistet, dass immer mindestens eine Spanneinheit in der Konfiguration enthalten ist, auch wenn der Benutzer keine Auswahl trifft, wodurch Sicherheit und Zuverlässigkeit der Spannvorrichtung gesteigert werden können.

Nach Auswahl der mindestens einen Spanneinheit bzw. Übernahme der automatisch bestimmten Spanneinheit werden dieser in einem nächsten Schritt ein oder mehrere Sensoren und/oder Aktoren automatisch zugeordnet. Mit anderen Worten weist die Recheneinheit der mindestens einen Spanneinheit einen oder mehrere Sensoren und/oder Aktoren automatisch zu. Die automatisch zugeordneten Sensoren und/oder Aktoren dienen, wie oben beschrieben, zur Steuerung und/oder Überwachung der Spanneinheit. Sie beinhalten alle Sensoren und/oder Aktoren, die benötigt werden, um einen sicheren Betrieb der Spanneinheit in der Werkzeugmaschine zu gewährleisten.

Werden mehrere Spanneinheiten für die Spannvorrichtung ausgewählt, so kann die Recheneinheit jeder Spanneinheit ein oder mehrere Sensoren und/oder Aktoren automatisch zuordnen, die zu deren Steuerung und/oder Überwachung benötigt werden. Durch die automatische Zuordnung dieser Sensoren/Aktoren ist sichergestellt, dass kein für den Betrieb der Spanneinheiten sicherheitsrelevanter Sensor und/oder Aktor vergessen wird. Als *"sicherheitsrelevant"* soll ein Sensor oder Aktor insbesondere dann gelten, wenn er eine Größe überwacht, steuert und/oder einstellt, die benötigt wird, um eine Spannung bzw. Klemmung der Spanneinheit herzustellen und/oder aufrechtzuerhalten. Beispielsweise sind bei einer fluidischen Spanneinheit ein Drucksensor, der deren Druck misst und ein Druckhalteventil, das den Druck einstellt bzw. aufrechterhält, sicherheitsrelevant.

Zur automatischen Zuordnung der Sensoren und/oder Aktoren zu einer Spanneinheit können für jede in der Werkzeugmaschine einsetzbare Spanneinheit, die für diese sicherheitsrelevanten Sensoren und/oder Aktoren in einer Datenbank gespeichert sein, auf welche die Recheneinheit während des Konfigurationsprozesses zugreifen kann. Bei der Datenbank kann es sich zweckmäßigerweise um die Datenbank handeln, in der auch die Liste der einsetzbaren Spanneinheiten gespeichert ist, wobei die sicherheitsrelevanten Sensoren und/oder Aktoren bereits den entsprechenden Spanneinheiten zugeordnet sein können. Es ist jedoch ebenso möglich, dass die Sensoren und/oder Aktoren in einer separaten Datenbank gespeichert sind. Die Datenbank kann wiederum in der Steuereinheit der Werkzeugmaschine enthalten sein oder sich entfernt von dieser, z.B. auf einem externen Server, befinden.

Beispielsweise können alle für eine jeweiligen Spanneinheit geeignete Sensoren und/oder Aktoren in einer Datenstruktur, wie einer Liste oder Tabelle, in der Datenbank gespeichert sein. Dabei können die für die jeweilige Spanneinheit sicherheitsrelevanten Sensoren und/oder Aktoren entsprechend gekennzeichnet sein, so dass sie von der Recheneinheit als solche erkannt werden können. Es ist ebenso möglich, dass die sicherheitsrelevanten Sensoren und/oder Aktoren in einer separaten Datenstruktur für den Zugriff durch die Recheneinheit gespeichert sind, während weitere in/an der jeweilige Spanneinheit optional einsetzbare Sensoren und/oder Aktoren (zusätzliche Sensoren und/oder Aktoren) in einer weiteren Datenstruktur gespeichert sind, die z.B. für den Zugriff durch den Benutzer vorgesehen ist. Die Recheneinheit kann alle für die vorliegende(n) Spanneinheit(en) sicherheits-relevanten Sensoren und/oder Aktoren aus der Datenbank auslesen und z.B. in eine Komponentenliste eintragen, die auf der Ausgabevorrichtung der Recheneinheit angezeigt und in der Konfiguration gespeichert werden kann,

Gemäß einer Ausführungsform können die der mindestens einen Spanneinheit automatisch zugeordneten Sensoren und/oder Aktoren vor Änderungen geschützt werden. Mit anderen Worten können diese sicherheitsrelevanten Sensoren und/oder Aktoren nicht durch den Benutzer geändert oder aus der Konfiguration entfernt werden, sondern sind dauerhaft in Verbindung mit der jeweiligen Spanneinheit in der Konfiguration gespeichert.

Insbesondere kann eine Spanneinheit mit den zugeordneten Sensoren und/oder Aktoren in der Konfiguration erhalten werden. Mit anderen Worten können nicht alle automatisch bestimmten oder ausgewählten Spanneinheiten von dem Benutzer wieder entfernt werden, sondern eine Spanneinheit mit den ihr zugeordneten Sensoren und/oder Aktoren wird dauerhaft in der Konfiguration gespeichert. Die Recheneinheit kann dazu ein Löschen einer letzten in der Konfiguration enthaltenen Spanneinheit verhindern. Dadurch kann die Gefahr einer fehlenden Spanneinheit in der Konfiguration der Spannvorrichtung nochmals reduziert werden.

Zusammenfassend können durch die dauerhafte Zuordnung der sicherheitsrelevanten Sensoren und/oder Aktoren zu der mindestens einen Spanneinheit sowie die dauerhafte Speicherung einer Spanneinheit mit den ihr zugeordneten Sensoren und/oder Aktoren in der Konfiguration die Sicherheit und Zuverlässigkeit der Spannvorrichtung im Betrieb der Werkzeugmaschine nochmals gesteigert werden.

Nach dem automatischen Zuordnen der für die mindestens eine Spanneinheit benötigten Sensoren und/oder Aktoren wird in einem nächsten Schritt mindestens eine Schnittstelleneinheit ausgewählt. Dies kann wiederum anhand eines Auswahlmenüs auf der Ausgabevorrichtung der Recheneinheit erfolgen, mittels dessen eine Liste mit Schnittstelleneinheiten angezeigt werden kann. Dabei kann es sich wiederum um ein Dropdown-Menü handeln, das sich nach Betätigen einer entsprechenden Schaltfläche durch den Benutzer öffnet. Die mindestens eine auszuwählende Schnittstelleneinheit dient dabei, wie oben beschrieben, zum signaltechnischen Verbinden der Sensoren und/oder Aktoren mit einer Recheneinheit der Spannvorrichtung, die insbesondere die Steuereinheit der Werkzeugmaschine sein kann. Die angezeigte Liste mit Schnittstelleneinheiten kann beispielsweise alle für die Sensoren und/oder Aktoren der mindestens einen Spanneinheit verfügbaren Schnittstelleneinheiten umfassen.

Gemäß einer Ausführungsform können eine oder mehrere für die Sensoren und/oder Aktoren geeignete Schnittstelleneinheiten automatisch bestimmt werden. Mit anderen Worten können in der Konfiguration der Spannvorrichtung bereits eine oder mehrere automatisch bestimmte Schnittstelleneinheiten enthalten sein, die in der Konfiguration verbleiben, wenn der Benutzer keine anderen aus der Liste der verfügbaren Schnittstelleneinheiten auswählt. Dadurch kann das Erstellen der Konfiguration der Spannvorrichtung beschleunigt werden.

Zur automatischen Bestimmung der Schnittstelleneinheiten können für eine Vielzahl von Sensoren und/oder Aktoren geeignete Schnittstelleneinheiten in einer Datenbank gespeichert sein, auf welche die Recheneinheit während der Konfiguration zugreifen kann. Dieser Datenbank kann die Recheneinheit auch die mittels des Auswahlmenüs angezeigte Liste mit Schnittstelleneinheiten entnehmen. Bei der Datenbank kann es sich zweckmäßigerweise um die Datenbank handeln, in der auch die Datenstrukturen der Spanneinheiten sowie der Sensoren und/oder Aktoren gespeichert sind. Es ist jedoch ebenso möglich, dass die Schnittstelleneinheiten in einer separaten Datenbank gespeichert sind. Die Datenbank kann wiederum in der Steuereinheit der Werkzeugmaschine enthalten sein oder sich entfernt von dieser, z.B. auf einem externen Server, befinden.

Insbesondere können die Schnittstelleneinheiten in einer Datenstruktur, wie einer Liste oder Tabelle, in der Datenbank gespeichert sein. Beispielsweise kann für jede Schnittstelleneinheit (z.B. für jeden IO-Link Master, jede IO-Link Hub etc.) eine Liste verfügbarer Modelle von Schnittstelleneinheiten in der Datenbank vorliegen. Um eine Schnittstelleneinheit für die vorliegenden Sensoren und/oder Aktoren während der Konfiguration der Spannvorrichtung automatisch zu bestimmen, kann die Recheneinheit z.B. auf eine an erster Stelle der jeweiligen Liste stehende Schnittstelleneinheit zugreifen. Jede andere Art von Datenstruktur zur Speicherung der Schnittstelleneinheiten in einer Datenbank, die es ermöglicht, auf eine geeignete Schnittstelleneinheit für die betreffenden Sensoren und/oder Aktoren zuzugreifen, ist ebenso möglich.

Nach der Auswahl der mindestens einen Schnittstelleneinheit werden in einem nächsten Schritt die Sensoren und/oder Aktoren mit dieser verknüpft.

Gemäß einer Ausführungsform kann das Verknüpfen der Sensoren und/oder Aktoren mit der mindestens einen Schnittstelleneinheit ein Zuweisen der Sensoren und/oder Aktoren zu einzelnen Anschlüssen der Schnittstelleneinheit beinhalten.

Insbesondere kann das Verknüpfen der Sensoren und/oder Aktoren mit der mindestens einen Schnittstelleneinheit automatisch erfolgen. Beispielsweise können die Sensoren und/oder Aktoren automatisch den entsprechenden Anschlüssen der Schnittstelleneinheit zugewiesen werden. Die Recheneinheit kann beispielsweise die Sensoren und/oder Aktoren, die der mindestens einen Spanneinheit zugewiesen wurden, entsprechend ihrer Reihenfolge in der gespeicherten Komponentenliste den Anschlüssen der Schnittstelleneinheit zuweisen. Mit anderen Worten kann die Recheneinheit einen Sensor oder Aktor, der an erster Stelle in der Komponentenliste steht, dem ersten Anschluss der Schnittstelleneinheit zuweisen, einen Sensor oder Aktor, der an zweiter Stelle steht, dem zweiten Anschluss der Schnittstelleneinheit zuweisen etc. Die automatische Zuweisung kann von der Recheneinheit beispielsweise in eine Tabelle zwischengespeichert werden, die z.B. auf der Ausgabevorrichtung der Recheneinheit ausgegeben bzw. angezeigt und nachfolgend durch den Benutzer angepasst werden kann.

In einem letzten Schritt wird dann die mindestens eine ausgewählte Spanneinheit mit den zugewiesenen Sensoren und/oder Aktoren und der mindestens einen, mit den Sensoren und/oder Aktoren verknüpften Schnittstelleneinheit als Konfiguration der Spannvorrichtung zur Verwendung im Betrieb der Werkzeugmaschine gespeichert. Mit anderen Worten wird ein Ergebnis des vorangegangenen Konfigurationsprozesses, dessen einzelne Schritte bis dato von der Recheneinheit zumindest teilweise nur zwischengespeichert wurden, endgültig gespeichert, um die Konfiguration der Werkzeugmaschine zur Verfügung stellen zu können. Die Speicherung kann von dem Benutzer z.B. durch Betätigen einer Schaltfläche ausgelöst werden. Wie oben beschrieben, kann die erstellte Konfiguration in Form eines Datensatzes beispielsweise in der Steuereinheit der Werkzeugmaschine oder in einer Datenbank wie oben beschrieben gespeichert werden.

Bei der Datenbank kann es sich zweckmäßigerweise um die Datenbank handeln, in der auch die Datenstrukturen der Spanneinheiten, der Sensoren und/oder Aktoren sowie der Schnittstellen-einheiten gespeichert sind. Es ist jedoch ebenso möglich, dass die Konfiguration in einer separaten Datenbank gespeichert wird, die in der Steuereinheit der Werkzeug-maschine enthalten sein oder sich entfernt von dieser, z.B. auf einem externen Server, befinden kann. In jedem Fall wird der Datensatz mit der Konfiguration der Spannvorrichtung derart gespeichert, dass er der Steuereinheit der Werkzeugmaschine im Betrieb der Werkzeugmaschine zur Verfügung steht, um der Steuereinheit zu ermöglichen, die Spannvorrichtung zu steuern und zu überwachen.

Gemäß einer Ausführungsform können neben den zugewiesenen Sensoren und/oder Aktoren ein oder mehrere zusätzliche Sensoren und/oder Aktoren von dem Benutzer ausgewählt und in der Konfiguration gespeichert werden. Die zusätzlich ausgewählten Sensoren und/oder Aktoren können beispielsweise dazu dienen, die Steuerung und/oder Überwachung der Spanneinheit(en) nochmals zu verbessern oder weitere im Betrieb der Werkzeugmaschine relevanten Größen aufzuzeichnen. Diese Sensoren und/oder Aktoren können durch den Benutzer geändert und auch wieder entfernt werden, da sie nicht sicherheitsrelevant für den Betrieb der Spannvorrichtung sind. Bei den zusätzlichen Sensoren und/oder Aktoren kann es sich sowohl um digitale als auch analoge Sensoren und/oder Aktoren handeln.

Wie im Fall der Spann- und der Schnittstelleneinheiten kann der Benutzer auch die zusätzlichen Sensoren und/oder Aktoren aus einer Liste auswählen, die mittels eines Auswahlmenüs angezeigt werden kann. Diese kann z.B. alle mit der mindestens einen Schnittstelleneinheit kompatiblen Sensoren und/oder Aktoren enthalten und ebenfalls in der Steuereinheit der Werkzeugmaschine oder in einer Datenbank wie oben beschrieben gespeichert sein. Die Liste der zusätzlichen Sensoren und/oder Aktoren kann z.B. der Datenbank entnommen werden, in der alle für eine jeweiligen Spanneinheit geeigneten Sensoren und/oder Aktoren gespeichert sind. Die zusätzlich ausgewählten Sensoren und/oder Aktoren können von der Recheneinheit z.B. der Liste mit den sicherheitsrelevanten Sensoren und/oder Aktoren in der Konfiguration hinzugefügt bzw. in dieser gespeichert werden.

Basierend auf einem Typ der ausgewählten Sensoren und/oder Aktoren können zusätzlich benötigte Elemente auf der Ausgabevorrichtung der Recheneinheit angezeigt werden. Wenn beispielsweise ein analoger Sensor und/oder Aktor in Verbindung mit einem IO-Link Master gemäß dem Standard IEC 61131-9 ausgewählt wurde, so kann ein passender Analog-Digital-Konverter angezeigt werden, welcher der Konfiguration hinzugefügt werden kann. Dazu können beispielsweise in der Datenbank, in der alle für eine jeweilige Spanneinheit geeigneten Sensoren und/oder Aktoren gespeichert sind, analoge Sensoren und/oder Aktoren bereits mit einem geeigneten Analog-Digital-Konverter verknüpft sein. Die Verknüpfung kann z.B. mittels eines entsprechenden Eintrags in einer Tabelle erfolgen, in der die Sensoren und/oder Aktoren in der Datenbank gespeichert sind. Die Recheneinheit kann während des Konfigurationsprozesses auf die Datenbank zugreifen und auf diese Weise bei Auswahl eines analogen Sensors und/oder Aktors durch den Benutzer auf den zusätzlich benötigten Analog-Digital-Konverter hinweisen.

Anstelle des angezeigten Analog-Digital-Konverters kann der Benutzer wiederum mittels eines Auswahlmenüs einen anderen Analog-Digital-Konverter aus einer entsprechenden Liste auswählen. Die Liste kann in Verbindung mit dem analogen Sensor ebenfalls in der Datenbank mit den für eine jeweiligen Spanneinheit geeigneten Sensoren und/oder Aktoren gespeichert sein. Weitere zusätzlich benötigte Elemente können beispielsweise Adapter sein, die zum Anschließen bestimmter Sensoren und/oder Aktoren an die mindestens eine Schnittstelleneinheit benötigt werden, wenn Anschlüsse der Sensoren und/oder Aktoren nicht mit den Anschlüssen der Schnittstelleneinheit kompatibel sind. Diese können in Verbindung mit einem betreffenden Sensor und/oder Aktor von der Recheneinheit in gleicher Weise behandelt werden, wie in Verbindung mit dem Analog-Digital-Konverter beschrieben.

Alle in der Konfiguration eingerichteten Elemente, wie die Spanneinheit(en), die Sensoren und/oder Aktoren, die Schnittstelleneinheit(en) und die zusätzlichen Elemente (z.B. Analog-Digital-Konverter) können zudem vor dem Speichern der Konfiguration mit einem benutzerdefinierten Namen und einem Kommentar versehen werden. Dadurch können zusätzliche Informationen in die Konfiguration integriert werden, die deren Verwendung erleichtern.

Zusammenfassend ermöglicht es die Erfindung einem Benutzer einer Werkzeugmaschine, eine Konfiguration einer Spannvorrichtung für die Werkzeugmaschine eigenständig zu erstellen und dabei einen sicheren und zuverlässigen Betrieb der Spannvorrichtung zu gewährleisten. Dieser wird insbesondere dadurch erzielt, dass für ein Betätigen der mindestens einen Spanneinheit sicherheitsrelevante Sensoren und/oder Aktoren automatisch von der Recheneinheit vorgegeben werden und nicht durch den Benutzer geändert werden können. Zudem verhindert die Recheneinheit, dass eine letzte in der Konfiguration enthaltene Spanneinheit durch den Benutzer gelöscht wird und stellt somit sicher, dass immer mindestens eine Spanneinheit in der Konfiguration enthalten ist.

### Kurzbeschreibung der Figuren

Fig. 1 zeigt schematisch und exemplarisch eine Spannvorrichtung mit einer Recheneinheit, die mittels des erfindungsgemäßen Verfahrens konfiguriert werden kann.
Fig. 2 zeigt schematisch eine Bedienoberfläche, die auf einem Display der in Fig. 1 gezeigten Recheneinheit angezeigt werden kann.
Fig. 3 zeigt schematisch eine weitere Bedienoberfläche, die auf dem Display der in Fig. 1 gezeigten Recheneinheit angezeigt werden kann.
Fig. 4 zeigt schematisch eine weitere Bedienoberfläche, die auf dem Display der in Fig. 1 gezeigten Recheneinheit angezeigt werden kann.
Fig. 5 zeigt ein Flussdiagramm, in dem einzelne Schritte eines Ausführungsbeispiels des erfindungsgemäßen Verfahrens dargestellt sind.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. In den Figuren sind gleiche Elemente mit gleichen Bezugszeichen versehen, so dass auf eine wiederholte Beschreibung der Elemente verzichtet wird, sofern dies nicht notwendig ist.

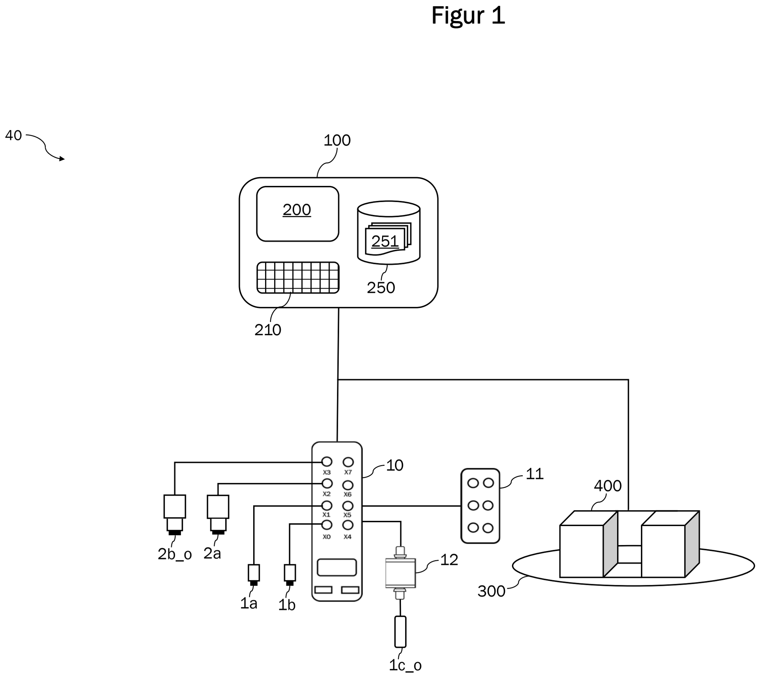

Fig. 1 zeigt schematisch und exemplarisch eine Spannvorrichtung 40 für eine Werkzeugmaschine (nicht dargestellt), die mittels des erfindungsgemäßen Verfahrens konfiguriert werden kann. Die gezeigte Spannvorrichtung 40 umfasst eine Spanneinheit 400, die auf einer Palette 300 montiert ist. Die Palette 300 kann über eine Übertragungsanordnung verfügen (nicht dargestellt), die es erlaubt Energie und Signale an die Spanneinheit 400 zu übertragen, um diese automatisiert zu betätigen. Dazu ist vorliegend eine Recheneinheit 100 der Spannvorrichtung 40, die insbesondere eine Steuereinheit der Werkzeugmaschine sein kann, signaltechnisch über die Übertragungseinheit der Palette 300 mit der Spanneinheit 400 verbunden. Bei der Spanneinheit 400 handelt es sich vorliegend um hydraulische Spannbacken 400, die mittels einer Hydraulikflüssigkeit (nicht dargestellt) betätigt werden. Dazu können in der Übertragungsanordnung der Palette 300 entsprechende Kanäle angebracht sein, durch die Hydraulikflüssigkeit von einem Hydraulikaggregat (nicht dargestellt) zu den hydraulischen Spannbacken 400 gelangt. Die Recheneinheit 100 ist zudem mit einer Schnittstelleneinheit 10 verbunden, die vorliegend eine IO-Link Master 10 gemäß dem Standard IEC 61131-9 ist. Dieser enthält eine Vielzahl von Anschlüssen X0 bis X7, wobei an den Anschlüssen XO und X1 jeweils ein Drucksensor 1a, 1b angeschlossen ist, der einen an den hydraulischen Spannbacken 400 anliegenden Hydraulikdruck erfasst. Die Anschlüsse X2 und X3 sind jeweils mit einem Druckhalteventil 2a, 2b_o verbunden. Dabei sind die beiden Drucksensoren 1a, 1b an den Anschlüssen X0, X1 sowie das an Anschluss X2 angeschlossene erste Druckhalteventil 2a sicherheitsrelevante Sensoren und Aktoren, die im Rahmen der Konfiguration der Spannvorrichtung 40 den hydraulischen Spannbacken 400 automatisch zugeordnet und mit dem IO-Link Master 10 verknüpft werden. Mit anderen Worten werden die Anschlüsse X0 bis X3 des IO-Link Masters 10 automatisch mit den beiden Drucksensoren 1a, 1b sowie dem ersten Druckhalteventil 2a belegt. Durch Verwendung von zwei Drucksensoren 1a, 1b , die beide den Hydraulikdruck an den hydraulischen Spannbacken 400 messen, wird eine redundante Druckerfassung geschaffen, die eine erhöhte Sicherheit und Zuverlässigkeit bei Ausfall eines der beiden Drucksensoren 1a, 1b bietet. Um den Hydraulikdruck an den hydraulischen Spannbacken 400 aufrechtzuerhalten, wenn diese von dem Hydraulikaggregat getrennt werden, z.B. wenn die Palette 300 von der Werkzeugmaschine zu einem Rüstplatz (nicht dargestellt) bewegt wird, ist das erste Druckhalteventil 2a ausreichend. Das zweite Druckhalteventil 2b_o wurde als zusätzlicher Aktor in der Spannvorrichtung 40 ausgewählt, der z.B. zur optionalen Unterstützung des ersten Druckhalteventils 2a oder zum Aufrechterhalten eines Hydraulikdrucks an einer anderen Stelle der Spannvorrichtung 40 dienen kann. Der Anschluss X4 des IO-Link Masters 10 ist über einen Analog-Digital-Konverter 12 mit einem analogen Füllstandssensor 1c_o verbunden, der einen Füllstand in einem Tank (nicht dargestellt) des Hydraulikaggregats überwacht. Der Digital-Analog-Konverter 12 stellt dabei ein zusätzlich benötigtes Element 12 dar, das erforderlich ist, um ein Signal des analogen Füllstandssensor 1c_o mittels des IO-Link Masters 10 an die Recheneinheit 100 zu senden. Bei dem Füllstandssensor 1c_o handelt es sich ebenfalls um einen optionalen Sensor, der zusätzlich zu den sicherheitsrelevanten Drucksensoren 1a, 1b und dem ersten Druckhalteventil 2a ausgewählt wurde. Der IO-Link Master 10 ist zudem mit einer IO-Link Hub 11 gemäß dem Standard IEC 61131-9 als weiterer Schnittstelleneinheit 11 verbunden, an die weiteren Sensoren bzw. Aktoren angeschlossen werden können.

Die Recheneinheit 100, die insbesondere eine Steuereinheit der Werkzeugmaschine sein kann, umfasst eine Ausgabevorrichtung 200 in Form eines Displays 200, das vorliegend als Touch-Screen ausgeführt ist, und somit auch als Eingabevorrichtung dienen kann. Als weitere Eingabevorrichtung ist eine Tastatur 210 an der Recheneinheit 100 angebracht. Zudem ist in dieser eine Datenbank 250 enthalten, in der z.B. ein Datensatz 251, welcher die gezeigte Konfiguration der Spannvorrichtung 40 abbildet, gespeichert sein kann. In der Datenbank 250 können zudem für den nachfolgend beschriebenen Konfigurations-prozess der Spannvorrichtung benötigte Informationen gespeichert sein.

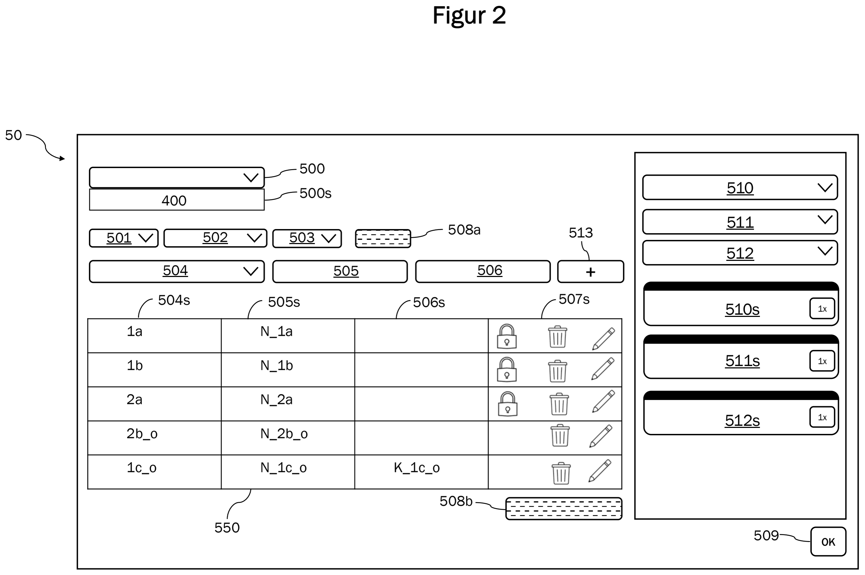

Fig. 2 zeigt schematisch eine Bedienoberfläche 50, die auf dem Display 200 der in Fig. 1 gezeigten Recheneinheit 100 der Spannvorrichtung 40 angezeigt werden kann. Die Bedienoberfläche 50 ist dazu eingerichtet, eine Spannvorrichtung 40 wie in Fig. 1 gezeigt zu konfigurieren, insbesondere Elemente der Spannvorrichtung 40 auszuwählen, funktional miteinander zu verbinden und als Datensatz 251 in der Datenbank 250 abzuspeichern. Insbesondere erlaubt es die Bedienoberfläche 50 einem Benutzer (nicht dargestellt) der Werkzeugmaschine die Spannvorrichtung 40 selbständig zu konfigurieren und gewährleistet dabei, dass alle Sicherheitsanforderungen an die Spannvorrichtung 40 erfüllt werden. Anstatt auf dem Display 200 der in Fig. 1 gezeigten Recheneinheit 100, kann die Bedienoberfläche 50 auch auf einem Bildschirm eines Computers (nicht dargestellt) angezeigt und mittels dessen Eingabevorrichtungen, z.B. einer Tastatur und/oder einer Computer-Maus, bedient werden.

Die Bedienoberfläche 50 umfasst ein erstes Dropdown-Menü 500 mittels dessen mindestens eine Spanneinheit von dem Benutzer ausgewählt werden kann. Bei Öffnen des Dropdown-Menüs 500 mittels der angedeuteten Pfeilspitze kann beispielsweise eine Liste aller in der vorliegenden Werkzeugmaschine einsetzbaren Spanneinheiten angezeigt werden (nicht dargestellt). Die Liste kann der Datenbank 250 entnommen werden, in der die einsetzbaren Spanneinheiten für die vorliegende Werkzeugmaschine gespeichert sind. Im vorliegenden Fall wurden die hydraulischen Spannbacken 400 der in Fig. 1 gezeigten Spannvorrichtung 40 von dem Benutzer als Spanneinheit 400 ausgewählt und von der Recheneinheit 100 in der Konfiguration zwischengespeichert. Daher ist diese in dem Feld 500s aufgelistet. Es ist ebenso möglich, dass die Spanneinheit 400 automatisch bestimmt wird. In diesem Fall ist bereits zu Beginn des Konfigurationsprozesses, z.B. beim Öffnen der Bedienoberfläche 50 auf dem Display 200, eine Spanneinheit in dem Feld 500s eingetragen. In diesem Fall greift die Recheneinheit 100 auf die Datenbank 250 zu und wählt aus den darin gespeicherten Spanneinheiten eine vorbestimmte Spanneinheit aus. Beispielsweise können die Spanneinheiten in Reihenfolge ihrer Eignung für die Werkzeugmaschine in der Datenbank 250 gespeichert sein und die an oberster Stelle gelistete kann die vorbestimmte Spanneinheit sein.

Die automatisch bestimmte Spanneinheit kann von dem Benutzer der Bedienoberfläche 50 beibehalten oder durch mindestens eine in der Liste des ersten Dropdown-Menüs 500 aufgeführte Spanneinheit ersetzt werden. Es ist ebenso möglich, dass nur eine Anzahl der automatisch vorbestimmten Spanneinheit erhöht wird, also z.B. zwei Spanneinheiten vom Typ der automatisch bestimmten Spanneinheit in die Konfiguration aufgenommen werden. Die beiden Spanneinheiten können dann z.B. untereinander in dem Feld 500s aufgelistet werden.

Der Benutzer kann jedoch nicht alle vorbestimmten und/oder ausgewählten Spanneinheiten wieder aus dem Feld 500s entfernen, sondern es verbleibt eine Spanneinheit darin. Die Recheneinheit kann dazu ein Löschen einer letzten in dem Feld 500s eingetragenen Spanneinheit verhindern. Dadurch ist gewährleistet, dass jederzeit mindestens eine Spanneinheit in der Konfiguration enthalten ist, wodurch Sicherheit und Zuverlässigkeit der Spannvorrichtung 40 gesteigert werden können.

Mit der Auswahl der hydraulischen Spannbacken 400 durch den Benutzer werden diesen von der Recheneinheit 100 in der Bedienoberfläche 50 automatisch die beiden Drucksensoren 1a, 1b und das erste Druckhalteventil 2a zugeordnet. Dazu werden diese in die obersten drei Zeilen der Spalte 504s der Tabelle 550 (Komponentenliste) eingetragen. Zu automatischen Zuordnung der Drucksensoren 1a, 1b und des ersten Druckhalteventils 2a zu den hydraulischen Spannbacken 400 greift die Recheneinheit 100 wiederum auf die Datenbank 250 zu, in der für jede in der Werkzeugmaschine einsetzbare Spanneinheit 400, die für diese sicherheits-relevanten Sensoren und/oder Aktoren gespeichert sind.

Die Tabelle 550 enthält neben der Spalte 504s drei weitere Spalten 505s, 506s und 507s. In der Spalte 505s kann jeweils ein Name für die in Spalte 504s eingetragenen Sensoren und Aktoren vergeben werden, vorliegend N_1a, N_1b, N_2a für die beiden Drucksensoren 1a, 1b und das erste Druckhalteventil 2a, und in die Spalte 506s kann jeweils ein Kommentar zu den in Spalte 504s eingetragenen Sensoren und Aktoren ergänzt werden.

Namen und Kommentare der beiden in Spalte 504s eingetragenen Drucksensoren 1a, 1b und des ersten Druckhalteventils 2a kann der Benutzer ergänzen oder ändern. Dazu kann er einen in Spalte 507s als Stift dargestellten Bearbeitungsknopf betätigen, woraufhin alle bearbeitbaren Felder in der entsprechenden Zeile der Tabelle 550 editiert werden können. In der Spalte 507s ist zudem für jede Zeile der Tabelle 550 ein mittels eines Papierkorbs angedeuteter Löschknopf enthalten. Dieser erlaubt für die beiden Drucksensoren 1a, 1b und das erste Druckhalteventil 2a jedoch lediglich ein Löschen des Namens N_1a, N_1b, N_2a in Spalte 505s und/oder eines Kommentars in Spalte 506s. Die Einträge der Drucksensoren 1a, 1b und des ersten Druckhalteventils 2a in die Spalte 504s können hingegen nicht geändert oder gelöscht werden. Dies wird durch die Recheneinheit 100 verhindert und ist durch ein in Spalte 507s angedeutetes Schloss in den entsprechenden Zeilen der Tabelle 550 markiert. Durch die dauerhafte Zuordnung der sicherheitsrelevanten Drucksensoren1a, 1b und des sicherheitsrelevanten Druckhalteventils 2a zu den hydraulischen Spannbacken 400 kann die Sicherheit und Zuverlässigkeit der Spannvorrichtung 40 im Betrieb der Werkzeugmaschine nochmals gesteigert werden.

Über ein zweites Dropdown-Menü 504 können zusätzliche Sensoren 1c_o und/oder Aktoren 2b_o aus einer entsprechenden Liste (nicht dargestellt) ausgewählt und mittels einer mit einem Pluszeichen markierten Schaltfläche 513 in die Tabelle 550 eingetragen werden. Die Liste zusätzlicher Sensoren kann die Recheneinheit 100 ebenfalls basierend auf in der Datenbank gespeicherter Informationen erstellen. In dieser können neben den sicherheitsrelevanten Sensoren und/oder Aktoren für jede in der Werkzeugmaschine einsetzbare Spanneinheit auch optional einsetzbare Sensoren und/oder Aktoren gespeichert sein.

Für die zusätzlichen Sensoren 1c_o und/oder Aktoren 2b_o kann in Feld 505 ein Name vergeben und in Feld 506 ein Kommentar ergänzt werden, bevor sie mittels der Schaltfläche 513 in die Tabelle 550 eingefügt werden. Die Liste zusätzlichen Sensoren und/oder Aktoren kann mittels weiterer Dropdown-Menüs 502 bis 503 vorsortiert werden. Dabei erlaubt ein drittes Dropdown-Menü 502 eine Vorsortierung nach Typ der Sensoren/ Aktoren, ein viertes Dropdown-Menü eine Vorsortierung nach Mess- oder Stellgröße der Sensoren/Aktoren und ein fünftes Dropdown-Menü 503 eine Vorsortierung nach Hersteller der Sensoren/Aktoren. Die entsprechenden Vorsortierungen können mittels einer Schaltfläche 508a wieder aufgehoben werden.

Vorliegend hat der Benutzer das zweite Druckhalteventil 2b_o und den analogen Füllstandssensor 1c_o aus Fig. 1 als zusätzliche Aktor 2b_o bzw. Sensor 1c_o in Spalte 504s der Tabelle 550 eingetragen und für die beiden Elemente jeweils einen Name N_2b_o, N_1c_o vergeben. Zusätzlich wurde von der Recheneinheit 100 in Spalte 506s für den analogen Füllstandssensor 1c_o automatisch ein Kommentar K_1c_o eingetragen, der anzeigt, dass für diesen ein Analog-Digital-Konverter 12 erforderlich ist, wenn er an eine Schnittstelleneinheit 10, 11 angeschlossen wird. Der Kommentar K_1c_o kann von der Recheneinheit 100 wiederum anhand von in der Datenbank 250 gespeicherter Informationen automatisch erstellt werden. Dazu können in der Datenbank 250 Sensoren und/oder Aktoren, die zusätzliche Elemente 12 benötigen, als solche gekennzeichnet und diesen geeignete zusätzliche Elemente 12 zugeordnet sein.

Die Einträge des zweiten Druckhalteventils 2b und des Füllstandssensors 1c_o sind in Spalte 507s nicht mit einem Schloss gekennzeichnet und können daher mittels des Löschknopfs von dem Benutzer wieder vollständig entfernt werden. Zudem können über die Schaltfläche 508b alle nicht vor Änderungen geschützten Einträge in der Tabelle 550 von dem Benutzer gelöscht werden.

Mittels weiterer Dropdown-Menüs 510 bis 512 können Schnittstelleneinheiten 10, 11 und für diese zusätzlich benötigte Elemente 12 ausgewählt werden. Dabei dient vorliegend ein sechsten Dropdown-Menü 510 zur Auswahl eines IO-Link Masters 10, ein siebtes Dropdown-Menü 511 zur Auswahl einer IO-Link Hub 11 und ein achtes Dropdown-Menü 512 zur Auswahl eines Analog-Digital-Konverters 12. Zur Auswahl stehende Modelle von IO-Link Master 10, IO-Link Hub 11 und. Analog-Digital-Konverter 12 können auch hier jeweils aus einer Liste (nicht dargestellt) ausgewählt werden. Der ausgewählte IO-Link Master 10, die ausgewählte IO-Link Hub 11 sowie der ausgewählte Analog-Digital-Konverter 12 werden dann in die entsprechenden Felder 510s bis 512s eingetragen. In diesen ist zudem eine Anzahl der jeweiligen Elemente, vorliegend jeweils ein Element ("1x") eingetragen.

In den Feldern 510s bis 512s kann zu Beginn des Konfigurationsprozesses bereits jeweils ein automatisch bestimmter IO-Link Master 10, eine automatisch bestimmte IO-Link Hub 11 und ein automatisch bestimmter Analog-Digital-Konverter 12 eingetragen sein. Diese automatisch bestimmten Elemente können von dem Benutzer übernommen, d.h. nicht geändert werden oder durch mittels der Dropdown-Menüs 510 bis 512 bestimmter Schnittstelleneinheiten 10, 11 bzw. Analog-Digital-Konverter 12 ersetzt oder ergänzt werden.

Zur automatischen Bestimmung von IO-Link Master 10, IO-Link Hub 11 und Analog-Digital-Konverter 12 durch die Recheneinheit 100 können für eine Vielzahl von Sensoren und/oder Aktoren geeignete Modelle derselben in der Datenbank 250 gespeichert sein. Ebenso können die mittels der Dropdown-Menüs 510 bis 512 angezeigten Listen basierend auf den in der Datenbank 250 gespeicherten Modellen von IO-Link Master 10, IO-Link Hub 11 und Analog-Digital-Konverter 12 von der Recheneinheit 100 erstellt werden.

Wenn alle Elemente der Spannvorrichtung bestimmt, ausgewählt und/oder zugeordnet sind, so kann die derart erstellte Konfiguration durch Betätigen einer mit "OK" gekennzeichneten Schaltfläche 509 von dem Benutzer bestätigt und als Datensatz 251 in der Datenbank 250 der Recheneinheit 100, die insbesondere die Steuereinheit der Werkzeugmaschine sein kann, gespeichert werden. Dort steht sie dieser für die Steuerung und Überwachung der Spannvorrichtung 40 bzw. deren Spanneinheit 400 im Betrieb der Werkzeugmaschine zur Verfügung.

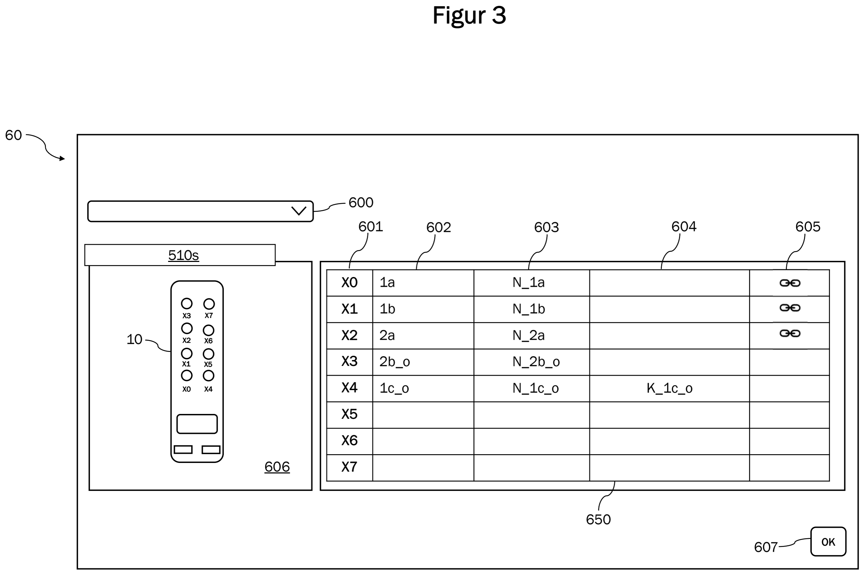

Fig. 3 zeigt schematisch eine weitere Bedienoberfläche 60, die auf dem Display 200 der in Fig. 1 gezeigten Recheneinheit angezeigt werden kann. Alternativ kann auch diese Bedienoberfläche 60 auf einem Bildschirm eines Computers angezeigt und mittels dessen Eingabevorrichtungen bedient werden.

Über die Bedienoberfläche 60 können Sensoren und Aktoren 1a bis 1c_o, 2a, 2b_o mit einer Schnittstelleneinheit 10, 11 verknüpft werden. Dazu kann über ein weiteres Dropdown-Menü 600 eine der in den Feldern 510s und 511s der Bedienoberfläche 50 eingetragenen Schnittstelleneinheiten 10, 11 ausgewählt und mittels einer Tabelle 650 mit den in der Tabelle 550 der Bedienoberfläche 50 eingetragenen Sensoren und Aktoren 1a bis 1c_o, 2a, 2b_o verknüpft werden.

Vorliegend wurde der in dem Feld 510s eingetragene IO-Link Master 10 als Schnittstelleneinheit 10, 11 ausgewählt, der in einem Bereich 606 der Bedienoberfläche 60 bildlich dargestellt ist. Die Sensoren und Aktoren 1a bis 1c_o, 2a, 2b_o werden gemäß der Tabelle 650 den einzelnen Anschlüssen X0 bis X4 des UO-Link Masters 10 zugeordnet. Dabei sind in einer ersten Spalte 601 der Tabelle 650 die Anschlüsse des IO-Link Masters 10 eingetragen, denen in einer zweiten Spalte 602 die entsprechenden Sensoren und Aktoren 1a bis 1c_o, 2a, 2b_o aus der Tabelle 550 der Bedienoberfläche 50 zugeordnet werden, In den folgenden Spalten 603 und 604 sind wiederum die Namen N_1a bis N_1c_o, N_2a, N_2b_o der einzelnen Sensoren/Aktoren 1a bis 1c_o, 2a, 2b_o sowie Kommentare K_1c_o zu diesen aufgeführt. Dabei ist analog zu der Tabelle 550 der Bedienoberfläche 50 in der Spalte 604 lediglich für den analoge Füllstandssensor 1c_o ein Kommentar K_1c_o eingetragen, der anzeigt, dass für diesen ein Analog-Digital-Konverter 12 erforderlich ist. In einer letzten Spalte 605 der Tabelle 650 wird mittels eines Kettensymbols angezeigt, welche Sensoren und Aktoren sicherheitsrelevant und daher dauerhaft den hydraulischen Spannbacken 400 zugeordnet sind.

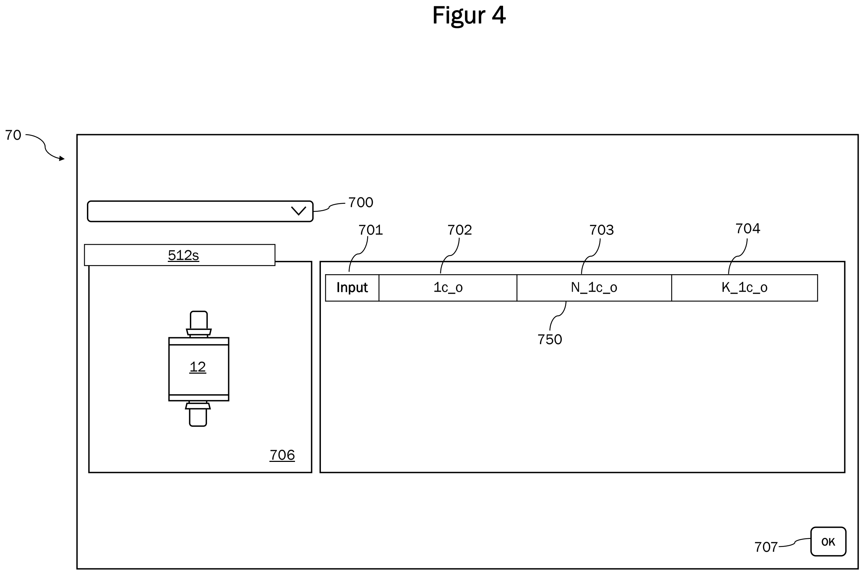

Die Tabelle 650 kann automatisch erzeugt werden, d.h. die einzelnen in Tabelle 550 aufgeführten Sensoren und Aktoren 1a bis 1c_o, 2a, 2b_o können automatisch, z.B. bei Aufruf der Bedienoberfläche 60, mit den Anschlüssen X0 bis X4 des UO-Link Masters 10 verbunden werden. Die Verknüpfung der Sensoren und Aktoren 1a bis 1c_o, 2a, 2b_o mit den Anschlüssen X0 bis X4 des UO-Link Masters 10 erfolgt dabei durch die Recheneinheit 100 gemäß der in Tabelle 550 eingetragenen Reihenfolge. Diese automatische Verknüpfung kann bei Bedarf von dem Benutzer geändert werden und die gewünschte Verknüpfung kann mittels der mit "OK" gekennzeichneten Schaltfläche 607 bestätigt und gespeichert werden. Fig. 4 zeigt schematisch eine weitere Bedienoberfläche 70, die auf dem Display 200 der in Fig. 1 gezeigten Recheneinheit 100 angezeigt werden kann. Alternativ kann auch diese Bedienoberfläche 70 auf einem Bildschirm eines Computers angezeigt und mittels dessen Eingabevorrichtungen bedient werden.

Über die Bedienoberfläche 70 kann ein analoger Sensor 1c_o einem Analog-Digital-Konverter 12 zugeordnet werden. Dieser kann über ein weiteres Dropdown-Menü 700 aus dem Feld 512s der Bedienoberfläche 50 ausgewählt und mittels einer Tabelle 750 mit dem analogen Sensor 1c_o verbunden werden, der in der Tabelle 550 mit dem entsprechenden Kommentar K_1c_o versehenen ist. Der Analog-Digital-Konverter 12 ist dabei in einem Bereich 706 der Bedienoberfläche 70 bildlich dargestellt. Zur Verbindung des analoger Sensors 1c_o mit dem Analog-Digital-Konverter 12 enthält die Tabelle 750 eine erste Spalte 701, in die ein Anschluss des Analog-Digital-Konverters 12, vorliegend "Input" eingetragen wird. Die folgenden Spalten 702 bis 704 enthalten den analogen Sensor bzw. dessen Bezeichnung 1c_o, den Namen N_1c_o des analogen Sensors 1c_o und den zugehörigen Kommentar K_1c_o. Die Tabelle 750 kann von der Recheneinheit 100 unter Verwendung der Datenbank 250 ebenfalls automatisch erzeugt und dadurch eine automatische Verbindung zwischen dem analogen Sensor 1c_o und dem Analog-Digital-Konverters 12 hergestellt werden. Die Belegung der Tabelle 750 kann wiederum bei Bedarf von dem Benutzer geändert und die gewünschte Belegung kann mittels der mit "OK" gekennzeichneten Schaltfläche 707 bestätigt und gespeichert werden.

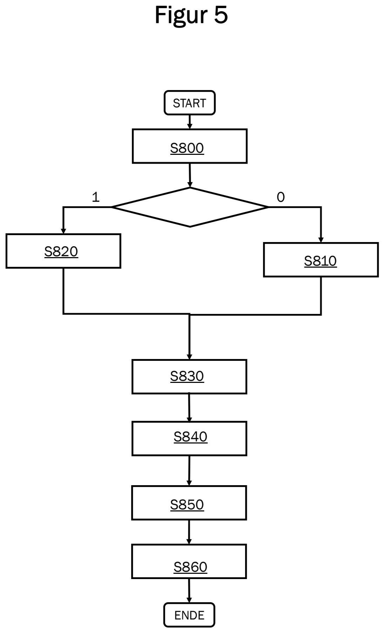

Fig. 5 zeigt ein Flussdiagramm, in dem einzelne Schritte eines Ausführungsbeispiels des erfindungsgemäßen Verfahrens dargestellt sind.

Nach dem Start des Verfahrens wird in Schritt S800 zunächst mindestens eine Spanneinheit 400, beispielsweise die hydraulischen Spannbacken 400 aus Fig. 1, automatisch bestimmt. Dazu kann die Recheneinheit 100, wie in Verbindung mit Fig. 2 beschrieben, auf die Datenbank 250 zugreifen, in der alle in der vorliegenden Werkzeugmaschine einsatzbaren Spanneinheiten gespeichert sein können. Wenn die mindestens eine automatisch bestimmte Spanneinheit 400 nicht durch einen Benutzer geändert wird (Pfad "0"), so wird diese in Schritt S810 in die Konfiguration übernommen. Dazu kann sie beispielsweise in das Feld 500s der in Fig. 2 gezeigten Bedienoberfläche 50 eingetragen und somit in der Konfiguration zwischengespeichert werden. Wenn die mindestens eine automatisch bestimmte Spanneinheit 400 durch den Benutzer z.B. durch Auswahl mindestens einer Spanneinheit 400 aus einer Liste des Dropdown-Menüs 500 der Bedienoberfläche 50 geändert wird (Pfad "1"), so wird in Schritt S820 die mindestens eine ausgewählte Spanneinheit 400 in die Konfiguration übernommen. In einem nachfolgenden Schritt S830 werden der Spanneinheit 400 sicherheitsrelevante Sensoren 1a, 1b und/oder Aktoren 2a wie in Verbindung mit Fig. 2 beschrieben von der Recheneinheit 100 automatisch zugeordnet. Dazu kann diese wiederum auf die Datenbank 250 zugreifen, in der für alle in der Werkzeugmaschine einsetzbaren Spanneinheiten, sicherheitsrelevanten Sensoren und/oder Aktoren gespeichert sein können. Beispielsweise kann die Recheneinheit 100 den hydraulischen Spannbacken 400 zwei redundante Drucksensoren 1a, 1b und ein Druckhalteventil 2a automatisch zuordnen. Diese Zuordnung kann nicht durch den Benutzer geändert werden, sondern wird von der Recheneinheit 100 dauerhaft in der Konfiguration gespeichert. Dann wird in einem Schritt S840 eine Schnittstelleneinheit 10, 11 zum signaltechnischen Verbinden der Drucksensoren 1a, 1b und des Druckhalteventils 2a mit der Recheneinheit 100 ausgewählt, wie in Verbindung mit Fig. 2 beschrieben. Die Schnittstelleneinheit 10, 11 kann vorliegend insbesondere ein IO-Link Master 10 gemäß dem Standard IEC 61131-9 sein. Nachfolgend wird in einem Schritt S850 der IO-Link Master 10 automatisch mit den Drucksensoren 1a, 1b und dem Druckhalteventil 2a verknüpft, wie in Verbindung mit Fig. 3 beschrieben, und in einem Schritt S860, die hydraulischen Spannbacken 400 mit den zugordneten Drucksensoren 1a, 1b und dem Druckhalteventil 2a sowie dem mit diesen verknüpften IO-Link Master 10 als Konfiguration gespeichert. Insbesondere kann die Konfiguration als Datensatz 251 in der Datenbank 250 der Recheneinheit 100 gespeichert werden, um im Betrieb der Werkzeugmaschine für die Steuerung und/oder Überwachung der Spannvorrichtung 40 bzw. deren Spanneinheit 400 zur Verfügung zu stehen. Danach wird das Verfahren gemäß dem vorliegenden Ausführungsbeispiel beendet.

Anhand der gezeigten Ausführungsbeispiele wird deutlich, dass es die Erfindung einem Benutzer einer Werkzeugmaschine ermöglicht, eine Konfiguration einer Spannvorrichtung 40 für die Werkzeugmaschine eigenständig zu erstellen und dabei einen sicheren und zuverlässigen Betrieb der Spannvorrichtung 40 zu gewährleisten. Dieser wird insbesondere dadurch erzielt, dass für ein Betätigen der Spanneinheit 400 sicherheitsrelevante Sensoren 1a, 1b und/oder Aktoren 2a automatisch von der Recheneinheit 100 vorgegeben werden und nicht durch den Benutzer geändert werden können. Zudem verhindert die Recheneinheit 100, dass eine letzte in der Konfiguration enthaltene Spanneinheit 400 durch den Benutzer gelöscht wird und stellt somit sicher, dass immer mindestens eine Spanneinheit 400 in der Konfiguration enthalten ist.

## Patentansprüche

1. Verfahren zum Erstellen einer Konfiguration einer Spannvorrichtung (40) für eine Werkzeugmaschine, umfassend die Schritte:
- Auswählen mindestens einer Spanneinheit (400) für die Spannvorrichtung (40);
- automatisches Zuordnen eines oder mehrerer Sensoren (1a, 1b) und/oder Aktoren (2a) zur Steuerung und/oder Überwachung der mindestens einen Spanneinheit (400);
- Auswählen mindestens einer Schnittstelleneinheit (10, 11) zum signaltechnischen Verbinden der Sensoren (1a, 1b) und/oder Aktoren (2a) mit einer Recheneinheit (100) der Spannvorrichtung (40);
- Verknüpfen der Sensoren (1a, 1b) und/oder Aktoren (2a) mit der Schnittstelleneinheit (10, 11);
- Speichern der mindestens einen ausgewählten Spanneinheit (400) mit den zugewiesenen Sensoren (1a, 1b) und/oder Aktoren (2a) und der mindestens einen, mit den Sensoren (1a, 1b) und/oder Aktoren (2a) verknüpften Schnittstelleneinheit (10, 11) als Konfiguration der Spannvorrichtung (40) zur Verwendung im Betrieb der Werkzeugmaschine.

2. Verfahren nach Anspruch 1, wobei eine für die Werkzeugmaschine geeignete Spanneinheit (400) automatisch bestimmt wird.

3. Verfahren nach Anspruch 1 oder 2, wobei wenn mehrere Spanneinheiten (400) ausgewählt werden, jeder Spanneinheit (400) ein oder mehrere Sensoren (1a, 1b) und/oder Aktoren (2a) zu deren Steuerung und/oder Überwachung automatisch zugeordnet werden.

4. Verfahren nach mindestens einem der vorstehenden Ansprüche, wobei die der mindestens einen Spanneinheit (400) automatisch zugeordneten Sensoren (1a, 1b) und/oder Aktoren (2a) vor Änderungen geschützt werden.

5. Verfahren nach mindestens einem der vorstehenden Ansprüche, wobei mindestens eine Spanneinheit (400) mit den zugeordneten Sensoren (1a, 1b) und/oder Aktoren (2a) in der Konfiguration erhalten wird.

6. Verfahren nach mindestens einem der vorstehenden Ansprüche, wobei ein oder mehrere zusätzliche Sensoren (1c_o) und/oder Aktoren (2b_o) ausgewählt und in der Konfiguration gespeichert werden; und
insbesondere basierend auf einem Typ der ausgewählten Sensoren (1c_o) und/oder Aktoren (2b_o) zusätzlich benötigte Elemente (12) angezeigt werden.

7. Verfahren nach mindestens einem der vorstehenden Ansprüche, wobei eine oder mehrere für die Sensoren (1a, 1b, 1c_o) und/oder Aktoren (2a, 2b_o) geeignete Schnittstelleneinheiten (10, 11) automatisch bestimmt werden.

8. Verfahren nach mindestens einem der vorstehenden Ansprüche, wobei das Verknüpfen der Sensoren (1a, 1b, 1c_o) und/oder Aktoren (2a, 2b_o) mit der mindestens einen Schnittstelleneinheit (10, 11) ein Zuweisen der Sensoren (1a, 1b, 1c_o) und/oder Aktoren (2a, 2b_o) zu einzelnen Anschlüssen (X0-X4) der Schnittstelleneinheit (10, 11) beinhaltet; und/oder
wobei das Verknüpfen der Sensoren (1a, 1b, 1c_o) und/oder Aktoren (2a, 2b_o) mit der mindestens einen Schnittstelleneinheit (10, 11) automatisch erfolgt.

9. Recheneinheit (100) mit einer Ein- und Ausgabevorrichtung (210, 200), die dazu eingerichtet ist, ein Verfahren nach mindestens einem der vorstehenden Ansprüche durchzuführen.

10. Spannvorrichtung (40) umfassend
- mindestens eine Spanneinheit (400);
- einen oder mehrere Sensoren (1a, 1b, 1c_o) und/oder Aktoren (2a, 2b_o) zur Steuerung und/oder Überwachung der mindestens einen Spanneinheit (400);
- eine Recheneinheit (100); und
mindestens eine Schnittstelleneinheit (10, 11) zum signaltechnischen Verbinden der Sensoren (1a, 1b, 1c_o) und/oder Aktoren (2a, 2b_o) der Spanneinheit (400) mit der Recheneinheit (100).

11. Spannvorrichtung (40) nach Anspruch 8, wobei die mindestens eine Spanneinheit (400) eine fluidische, elektrische oder vakuum-basierte Spanneinheit (400) ist.

12. Spannvorrichtung (40) nach Anspruch 8 oder 9, wobei wenn die Spanneinheit (400) eine fluidische Spanneinheit ist, die dieser zugeordneten Sensoren und/oder Aktoren, mindestens einen Drucksensor (1a, 1b) und mindestens ein Druckhalteventil (2a, 2b) umfassen.

13. Werkzeugmaschine umfassend eine Spannvorrichtung (40) nach mindestens einem der Ansprüche 8 bis 10.

14. Computerprogramm, das eine Recheneinheit (100) nach Anspruch 8 dazu veranlasst, alle Verfahrensschritte eines Verfahrens nach mindestens einem der Ansprüche 1 bis 10 durchzuführen, wenn es auf der Recheneinheit (100) ausgeführt wird.

15. Maschinenlesbares Speichermedium mit einem darauf gespeicherten Computerprogramm nach Anspruch 12.
